# EUROPÄISCHE PATENTSCHRIFT

(11) **EP 3 698 021 B1**
(45) Veröffentlichungstag und Bekanntmachung des Hinweises auf die Patenterteilung: **01.03.2023**
(21) Anmeldenummer: 18796373.1
(22) Anmeldetag: 17.10.2018
(51) Int. Cl.: F01D 5/14, F01D 25/30

(54) **DIFFUSORANORDNUNG EINER ABGASTURBINE**
DIFFUSER ASSEMBLY FOR EXHAUST TURBINE
DISPOSITIF DIFFUSEUR D'UNE TURBINE À GAZ D'ÉCHAPPEMENT

(30) Priorität: 19.10.2017 DE 102017124467
(43) Veröffentlichungstag der Anmeldung: 26.08.2020
(73) Patentinhaber: Turbo Systems Switzerland Ltd., 5400 Baden (CH)
(72) Erfinder: SENN, Stephan, 5236 Remingen (CH); MATHEY, Christoph, 5442 Fislisbach (CH)
(74) Vertreter: Zimmermann & Partner Patentanwälte mbB
(86) Internationale Anmeldenummer: PCT/EP2018/078397
(87) Internationale Veröffentlichungsnummer: WO 2019/076980

(56) Entgegenhaltungen:
- WO-A2-2008/023068
- DE-A1- 19 818 873
- DE-A1-102005 047 216
- DE-C1- 10 137 899
- JP-A- 2000 204 908

## Beschreibung

### TECHNISCHES GEBIET

Die Erfindung bezieht sich auf das Gebiet der Abgasturbolader für aufgeladene Brennkraftmaschinen. Insbesondere betrifft die Erfindung eine Diffusoranordnung einer Abgasturbine eines Abgasturboladers.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Bei aus dem Stand der Technik bekannten Abgasturbinen von Abgasturboladern wird die Druckrückgewinnung am Abgasturbinenausgang typischerweise mittels Diffusoren realisiert, die beispielsweise ringförmig und auf gerade Weise konisch ausgebildet sein können. Dabei wird die Strömung in axialer Richtung verlangsamt. Ferner kann anschließend eine Umlenkung der Strömung in radialer Richtung erflogen und das Abgas einem Abgassammelraum zugeführt werden.

JP 2000 204908 offenbart eine Abgasturbine mit den Merkmalen des Oberbegriffs von Anspruch 1. Weitere Abgasturbinen sind aus den Dokumenten WO 2008/023068, DE 101 37 899, DE 10 2005 047216 und DE 198 18 873 bekannt.

Es hat sich herausgestellt, dass bei derartigen aus dem Stand der Technik bekannten Diffusoren von Abgasturbinen die Druckrückgewinnung noch verbesserungswürdig ist. Insbesondere hat sich herausgestellt, dass bei den aus dem Stand der Technik bekannten Diffusoren Strömungsablösungen auftreten, beispielsweise bei der radialen Strömungsumlenkung, was sich nachteilig auf die Druckrückgewinnung auswirkt.

### KURZE DARSTELLUNG DER ERFINDUNG

Die Aufgabe der vorliegenden Erfindung besteht darin, eine Abgasturbine mit einer Diffusoranordnung bereitzustellen, die gegenüber den aus dem Stand der Technik bekannten Abgasdiffusoren verbessert ist. Insbesondere besteht die Aufgabe der vorliegenden Erfindung darin, eine Abgasturbine mit einer Diffusoranordnung bereitzustellen, die eine verbesserte Druckrückgewinnung und eine kompaktere Bauweise aufweist.

Zur Lösung der obengenannten Aufgabe wird eine Abgasturbine gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Abgasturbine bereitgestellt. Die Abgasturbine umfasst einen Turbinenrotor mit einer Vielzahl von Turbinenrotorblättern mit einer Turbinenrotorblatthöhe H. Die Abgasturbine umfasst ferner eine Diffusoranordnung mit einem Transversal-Diffusor und einem Abgassammelraum. Der Transversal-Diffusor ist stromabwärts der Turbinenrotorblätter angeordnet. Der Transversal-Diffusor weist einen gebogenen Diffusorkanal auf, der an einem Diffusorkanalauslass in den Abgassammelraum mündet. Ein Verhältnis M/H zwischen einer axialen Ausdehnung M des Abgassammelraums und der Turbinenrotorblatthöhe H weist einen Wert von 1,0 ≤ M/H ≤ 4,6 auf und ein Verhältnis P/H zwischen einer radialen Ausdehnung P der Diffusoranordnung und der Turbinenrotorblatthöhe H weist einen Wert von 2,7 ≤ P/H ≤ 4,9 auf. Ein Verhältnis D/H zwischen einer radialen Ausdehnung D des Diffusorkanals und der Turbinenrotorblatthöhe H weist einen Wert von 2,5 ≤ D/H ≤ 3,0 auf und ein Verhältnis R/H zwischen einem Turbinennabenradius R des Turbinenrotors und der Turbinenrotorblatthöhe H weist einen Wert von 1,1 ≤ R/H ≤ 1,5 auf.

Somit wird vorteilhafterweise eine Abgasturbine mit einer Diffusoranordnung bereitgestellt, die gegenüber den aus dem Stand der Technik bekannten Abgasturbinen verbessert ist. Insbesondere wird durch die erfindungsgemäße Abgasturbine eine Abgasturbine mit einem verbesserten Diffusordesign bereitgestellt, welches eine verbesserte Druckrückgewinnung am Abgasturbinenausgang ermöglicht. Des Weiteren wird eine Diffusoranordnung für eine Abgasturbine bereitgestellt, die eine kompaktere Bauweise, insbesondere eine kompaktere Bauweise in axialer Richtung, aufweist. Die kompakte Bauweise in axialer Richtung ermöglicht zudem eine uniforme Abströmung vom Abgassammelraum stromabwärts, womit Strömungsverluste reduziert werden.

Gemäß einem weiteren Aspekt der Erfindung wird ein Abgasturbolader mit einer Abgasturbine gemäß einer der hierin beschriebenen Ausführungsformen bereitgestellt, so dass vorteilhafterweise ein verbesserter Abgasturbolader bereitgestellt werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische longitudinale Schnittansicht eines Teilbereichs einer Abgasturbine mit einer Diffusoranordnung gemäß hierin beschriebenen Ausführungsformen; und
- Figur 2: eine longitudinale Schnittansicht eines Teilbereichs einer Abgasturbine mit einer Diffusoranordnung gemäß weiteren hierin beschriebenen Ausführungsformen.

### DETAILLIERTE BESCHREIBUNG DER FIGUREN

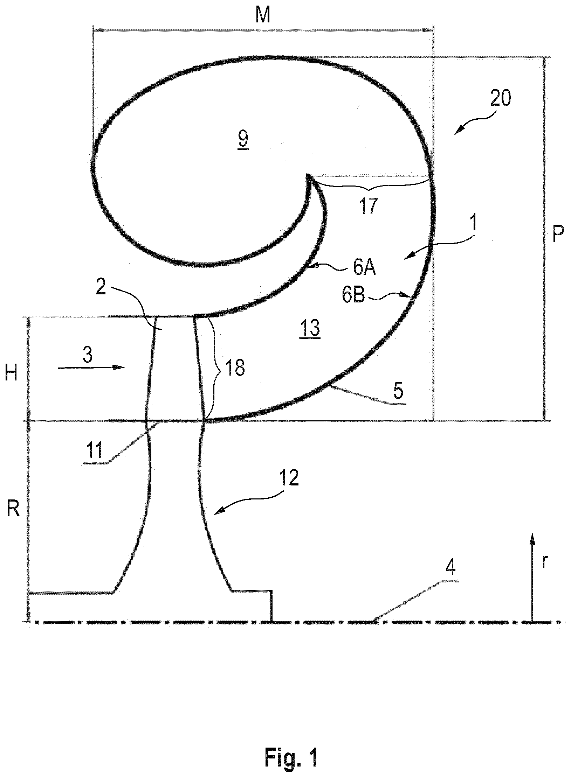

Figur 1 zeigt eine schematische longitudinale Schnittansicht eines Teilbereichs einer Abgasturbine gemäß hierin beschriebenen Ausführungsformen.

Insbesondere zeigt Figur 1 einen Teilbereich einer Abgasturbine umfassend einen Turbinenrotor 12 mit einer Vielzahl von Turbinenrotorblättern 2 mit einer Turbinenrotorblatthöhe H. Typischerweise ist der Turbinenrotor 12 um eine Rotationsachse 4 drehbar gelagert. In der Schnittansicht von Figur 1 ist beispielhaft ein Turbinenrotorblatt 2 mit der Turbinenrotorblatthöhe H dargestellt. Ferner umfasst die Abgasturbine eine Diffusoranordnung 20 mit einem Transversal-Diffusor 1 und einem Abgassammelraum 9.

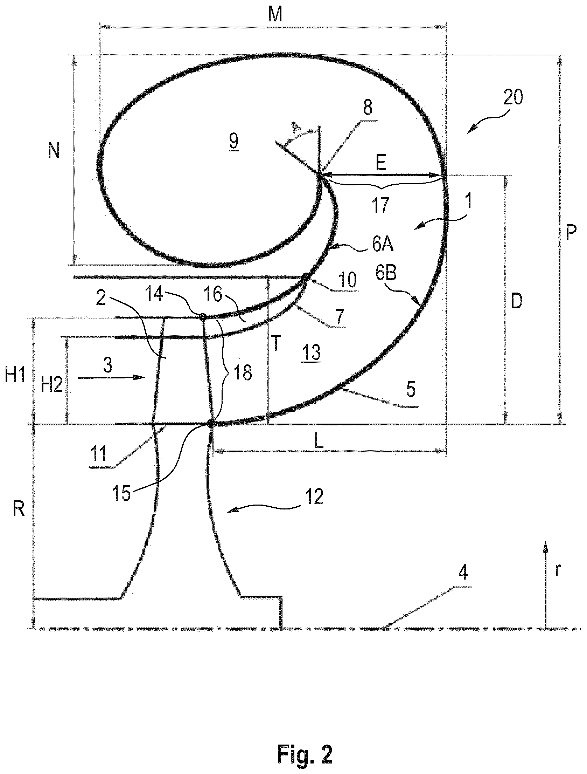

Der Transversal-Diffusor 1 ist stromabwärts der Turbinenrotorblätter 2 angeordnet. Die Strömungsrichtung 3 des Abgases ist in den Figuren 1 und 2 mit einem Pfeil eingezeichnet. Ferner umfasst die Diffusoranordnung 20 ein Diffusorgehäuse 5, wie es beispielhaft in Figur 1 dargestellt ist. Der Transversal-Diffusor 1 weist einen gebogenen Diffusor-kanal 13 auf. Typischerweise weist der Diffusorkanal 13 einen Diffusorkanaleinlass 18 und einen Diffusorkanalauslass 17 auf. Insbesondere ist der Diffusorkanaleinlass 18 derart ausgebildet um Abgas in Strömungsrichtung 3 in den Diffusorkanal 13 zu leiten.

In diesem Zusammenhang sei angemerkt, dass unter einem Transversal-Diffusor ein Diffusor zu verstehen ist, der in konstruktiver Hinsicht eine Kombination eines geraden Axialdiffusors mit einem gebogenen Diagonaldiffusor darstellt. In einem geraden Axialdiffusor erfolgt eine Strömungsverlangsamung mittels einer Vergrößerung des Diffusorkanalquerschnitts in Strömungsrichtung. In einem gebogenen Diagonaldiffusor erfolgt eine Strömungsverlangsamung mittels einer zunehmenden radialen Position des Diffusorkanalquerschnitts entlang der Strömungsrichtung. Bei einem Transversal-Diffusor wird die Strömung mittels beider Mechanismen verlangsamt, das heißt mittels einer Variation des Diffusorkanalquerschnitts als auch mittels einer zunehmenden radialen Position des Diffusorkanalquerschnitts.

Wie beispielhaft in Figur 1 gezeigt ist, erstreckt sich der Diffusorkanaleinlass 18 typischerweise in radialer Richtung r über die Turbinenrotorblatthöhe H. Der Diffusorkanal 13 mündet an dem Diffusorkanalauslass 17 in den Abgassammelraum 9. Insbesondere, ist der Diffusorkanal 13 radial nach Außen gebogen, wie es beispielhaft in Figur 1 dargestellt ist. Der Abgassammelraum weist eine axiale Ausdehnung M und die Diffusoranordnung weist eine radiale Ausdehnung P auf. In den Figuren 1 und 2 entspricht die axiale Richtung der Richtung der Rotationsachse 4 des Turbinenrotors 12. Die radiale Richtung r ist in den Figuren 1 und 2 durch einen Pfeil dargestellt. Gemäß der Erfindung weist ein Verhältnis M/H zwischen der axialen Ausdehnung M des Abgassammelraums 9 und der Turbinenrotorblatthöhe H einen Wert von 1,0 ≤ M/H ≤ 4,6 auf. Insbesondere weist das Verhältnis M/H einen Wert von 3,467 ≤ M/H ≤ 3,679 auf. Ferner weist ein Verhältnis P/H zwischen einer radialen Ausdehnung P der Diffusoranordnung 20 und der Turbinenrotorblatthöhe H einen Wert von 2,7 ≤ P/H ≤ 4,9 auf. Insbesondere weist das Verhältnis P/H einen Wert von 3,779 ≤ P/H ≤ 4,010 auf.

Es hat sich herausgestellt, dass die hierin beschriebenen Ausführungsformen der Abgasturbine, insbesondere das hierin beschriebene Designkonzept der Diffusoranordnung, besondere Vorteile hinsichtlich der Druckrückgewinnung bei gleichzeitiger Realisierung einer axialen kompakten Bauraumgrösse aufweisen, so dass im Vergleich zu aus dem Stand der Technik bekannten Abgasturbinen eine verbesserte Abgasturbine bereitgestellt wird.

Ferner hat das hierin beschriebene Designkonzept der Diffusoranordnung den Vorteil, dass es auf verschiedene Turbinenrotorblatthöhen angepasst werden kann, wobei gleichzeitig eine optimale Druckrückgewinnung innerhalb einer kürzeren axialen Länge des Diffusors erreicht wird, wodurch eine in axialer Richtung kompaktere Turbinenstufe und damit ein kompakterer Turbolader realisiert werden kann. Eine kompaktere Bauweise ist insbesondere aufgrund von Bauraumbeschränkungen im Motor besonders vorteilhaft.

Darüber hinaus werden in den hierin beschriebenen Ausführungsformen der Diffusoranordnung Strömungsablösungsverluste durch ein sanftes und kontinuierliches Drehen der Strömung von der axialen Richtung in die radiale Richtung als auch aufgrund der Variation des Diffusorkanalquerschnitts entlang der Strömungsrichtung minimiert. Die Variation ist angepasst an die Strömungsverhältnisse, sodass die Gefahr einer Ablösung der Strömung gebannt wird.

Gemäß einer Ausführungsform, die mit anderen hierin beschriebenen Ausführungsformen kombiniert werden kann, ist die Turbinenrotorblatthöhe H aus einem Bereich von einer minimalen Turbinenrotorblatthöhe H2 bis zu einer maximalen Turbinenrotorblatthöhe H1 ausgewählt. Die maximale Turbinenrotorblatthöhe H1 und die minimale Turbinenrotorblatthöhe H2 sind beispielhaft in Figur 2 dargestellt. Ein Verhältnis H2/H1 zwischen der minimalen Turbinenrotorblatthöhe H2 und der maximalen Turbinenrotorblatthöhe H1 weist typischerweise einen Wert von 0,8 ≤ H2/H1 ≤ 1,0 auf.

Gemäß einer Ausführungsform, die mit anderen hierin beschriebenen Ausführungsformen kombiniert werden kann, weist der Diffusorkanalauslass 17 eine axiale Ausdehnung E auf, wie es beispielhaft in Figur 2 dargestellt ist. Insbesondere kann ein Verhältnis E/H zwischen der axialen Ausdehnung E des Diffusorkanalauslasses 17 und der Turbinenrotorblatthöhe H einen Wert von 0,9 ≤ E/H ≤ 1,8 aufweisen. Insbesondere weist das Verhältnis E/H einen Wert von 1,052 ≤ E/H ≤ 1,116 auf.

Gemäß einer Ausführungsform, die mit anderen hierin beschriebenen Ausführungsformen kombiniert werden kann, weist der Diffusorkanal 13 eine axiale Länge L auf, wie es beispielhaft in Figur 2 dargestellt ist. Insbesondere kann ein Verhältnis L/H zwischen der axialen Länge L des Diffusorkanals 13 und der Turbinenrotorblatthöhe H einen Wert von 1,5 ≤ L/H ≤ 3,0 aufweisen. Alternativ kann das Verhältnis L/H einen Wert von 2,0 ≤ L/H ≤ 2,7 aufweisen. Insbesondere weist das Verhältnis L/H einen Wert von 2,312 ≤ L/H ≤ 2,452 auf.

Gemäß der Erfindung weist der Diffusorkanal 13 eine radiale Ausdehnung D auf, wie es beispielhaft in Figur 2 dargestellt ist. Typischerweise entspricht die radiale Ausdehnung D dem radialen Abstand zwischen dem Anfangspunkt 15 der zweiten Diffusorkanal-Kontur 6B und dem Endpunkt 8 der ersten Diffusorkanal-Kontur 6A. Gemäss der Erfindung weist ein Verhältnis D/H zwischen der radialen Ausdehnung D des Diffusorkanals 13 und der Turbinenrotorblatthöhe H einen Wert von 2,5 ≤ D/H ≤ 3,0 auf. Insbesondere weist das Verhältnis D/H einen Wert von 2,623 ≤ D/H ≤ 2,782 auf.

Gemäß der Erfindung weist der Turbinenrotor 12 einen Turbinennabenradius R auf, wie es beispielhaft in den Figuren 1 und 2 dargestellt ist. Typischerweise erstreckt sich der Turbinennabenradius R von der Rotationsachse 4 des Turbinenrotors bis zur Turbinennaben-Kontur 11. Gemäss der Erfindung weist ein Verhältnis R/H zwischen dem Turbinennabenradius R und der Turbinenrotorblatthöhe H einen Wert von 1,1 ≤ R/H ≤ 1,5 auf. Insbesondere weist das Verhältnis R/H einen Wert von 1,248 ≤ R/H ≤ 1,324 auf.

Gemäß einer Ausführungsform, die mit anderen hierin beschriebenen Ausführungsformen kombiniert werden kann, umfasst der Diffusorkanal 13 eine erste Diffusorkanal-Kontur 6A, die sich von einem Anfangspunkt 14 der ersten Diffusorkanal-Kontur 6A zu einem Endpunkt 8 der ersten Diffusorkanal-Kontur 6A erstreckt, wie es beispielhaft in Figur 2 dargestellt ist. Typischerweise liegt die erste Diffusorkanal-Kontur 6A einer zweiten Diffusorkanal-Kontur 6B gegenüber. Der Anfangspunkt 14 der ersten Diffusorkanal-Kontur 6A ist in radialer Richtung weiter Außen angeordnet als ein Anfangspunkt 15 der zweiten Diffusorkanal-Kontur 6B, wie es beispielhaft in Figur 2 gezeigt ist.

Gemäß einer Ausführungsform, die mit anderen hierin beschriebenen Ausführungsformen kombiniert werden kann, ist die erste Diffusorkanal-Kontur 6A derart ausgebildet, dass an dem Endpunkt 8 der ersten Diffusorkanal-Kontur 6A ein Öffnungswinkel A des Diffusorkanalauslasses 17 bereitgestellt wird, wie es beispielhaft in Figur 2 gezeigt ist. Der Öffnungswinkel A des Diffusorkanalauslasses 17 ist der Winkel, der sich zwischen einer Tangentialen an dem Endpunkt 8 der ersten Diffusorkanal-Kontur 6A und der radialen Richtung r ergibt. Typischerweise weist der Öffnungswinkel A einen Wert von 20°≤ A ≤ 70° auf. Alternativ kann der der Öffnungswinkel A einen Wert von 30°≤ A ≤ 60° aufweisen. Insbesondere weist der Öffnungswinkel A einen Wert von 40°≤ A ≤ 50° auf.

Gemäß einer Ausführungsform, die mit anderen hierin beschriebenen Ausführungsformen kombiniert werden kann, weist der Abgassammelraum 9 eine radiale Ausdehnung N auf, wie es beispielhaft in Figur 2 dargestellt ist. Insbesondere kann ein Verhältnis N/H zwischen der radialen Ausdehnung N des Abgassammelraums 9 und der Turbinenrotorblatthöhe H einen Wert von (P-D)/H ≤ N/H ≤ (P-H)/H aufweisen, wobei P die radiale Ausdehnung der Diffusoranordnung 20 ist, und wobei D die radiale Ausdehnung des Diffusorkanals 13 ist. Insbesondere weist das Verhältnis N/H einen Wert von 2,130 ≤ N/H ≤ 2,260 auf.

Gemäß einer Ausführungsform, die mit anderen hierin beschriebenen Ausführungsformen kombiniert werden kann, kann der Diffusorkanal 13 ein Einsatzelement 16 aufweisen. Wie beispielhaft in Figur 2 dargestellt ist, kann das Einsatzelement 16 derart ausgebildet sein, dass das Einsatzelement 16 eine dritte Diffusorkanal-Kontur 7 bereitstellt. Typischerweise ist das Einsatzelement 16 derart angeordnet, dass die dritte Diffusorkanal-Kontur 7 an einem Übergangspunkt 10 in die erste Diffusorkanal-Kontur 6A übergeht. Wie in Figur 2 gezeigt ist, hat der Übergangspunkt 10 zu dem Anfangspunkt 15 der zweiten Diffusorkanal-Kontur 6B einen radialen Abstand T. Insbesondere weist ein Verhältnis T/H zwischen dem radialen Abstand T und der Turbinenrotorblatthöhe H einen Wert von 1,0 ≤T/H ≤ (P-N)/H auf, wobei P die radiale Ausdehnung des Transversal-Diffusors ist, und wobei N die radiale Ausdehnung des Abgassammelraums ist. Insbesondere weist das Verhältnis T/H einen Wert von 1,334 ≤ T/H ≤ 1,415 auf.

Das Einsatzelement 16 kann beispielsweise ringförmig ausgebildet sein. Typischerweise ist das Einsatzelement 16 derart dimensioniert, dass es die Öffnung des Diffusorkanaleinlasses 18 anpasst. Wie in Figur 2, beispielhaft dargestellt ist, kann die dritte Diffusorkanal-Kontur 7 des Einsatzelements 16 so ausgebildet sein, dass die Öffnung des Diffusorkanal-einlasses 18 in radialer Richtung r an die Turbinenrotorblatthöhe H (in Figur 2 auf die minimale Turbinenrotorblatthöhe H2) angepasst ist.

Wie aus den hierin beschriebenen Aus führungs formen hervorgeht wird vorteilhafterweise eine Abgasturbine mit einer Diffusoranordnung bereitgestellt, die gegenüber den aus dem Stand der Technik bekannten Abgasturbinen verbessert ist. Insbesondere wird durch die erfindungsgemäße Abgasturbine eine Abgasturbine mit einem verbesserten Diffusordesign bereitgestellt, welches eine verbesserte Druckrückgewinnung als auch eine kompakterer Bauweise, insbesondere eine kompaktere Bauweise in axialer Richtung, ermöglicht. Dementsprechend kann bei Verwendung einer Abgasturbine gemäß einer der hierin beschriebenen Ausführungsformen für einen Abgasturbolader vorteilhafterweise ein verbesserter Abgasturbolader bereitgestellt werden kann.

Abschließend sei angemerkt, dass das hierin beschriebene Design der Diffusoranordnung hinsichtlich der geforderten Dimensionierung entsprechend angepasst werden kann. Mit anderen Worten, das hierin beschriebene Design der Diffusoranordnung ist allgemein gültig und kann auf kleine, mittlere und große Bauraumgrößen übertragen werden. Ferner kann das hierin beschriebene Diffusorkonzept auf Axialturbinen, Mixed-Flow Turbinen und Radialturbinen angewendet werden, ist jedoch nicht auf Axialturbinen, Mixed-Flow Turbinen und Radialturbinen beschränkt. Ferner sei angemerkt, dass Figuren 1 und 2 eine longitudinale Schnittansicht in einer x-z-Ebene zeigen. Demnach beziehen sich die hierin angegebenen Werte und Verhältnisse typischerweise auf einen longitudinalen Schnitt der hierein beschriebenen Ausführungsformen der Diffusoranordnung in der x-z-Ebene, wie sie beispielhaft in den Figuren 1 und 2 gezeigt sind.

### BEZUGZEICHENLISTE

- 1: Transversal-Diffusor
- 2: Turbinenrotorblatt
- 3: Strömungsrichtung
- 4: Rotationsachse / axiale Richtung
- 5: Diffusorgehäuse
- 6A: erste Diffusorkanal-Kontur
- 6B: zweite Diffusorkanal-Kontur
- 7: dritte Diffusorkanal-Kontur
- 8: Endpunkt der ersten Diffusorkanal-Kontur
- 9: Abgassammelraum
- 10: Übergangspunkt zwischen dritter Diffusorkanal-Kontur und erster Diffusorkanal-Kontur
- 11: Turbinennaben-Kontur
- 12: Turbinenrotor
- 13: Diffusorkanal
- 14: Anfangspunkt der ersten Diffusorkanal-Kontur 6A
- 15: Anfangspunkt der zweiten Diffusorkanal-Kontur 6B
- 16: Einsatzelement
- 17: Diffusorkanalauslass
- 18: Diffusorkanaleinlass
- 20: Diffusoranordnung
- r: radiale Richtung
- R: Turbinennabenradius
- H: Rotorblatthöhe
- H1: maximale Turbinenrotorblatthöhe
- H2: minimale Turbinenrotorblatthöhe
- L: axiale Länge des Diffusorkanals
- D: radiale Ausdehnung des Diffusorkanals 13
- P: radiale Ausdehnung der Diffusoranodnung 20
- M: axiale Ausdehnung des Abgassammelraums 9
- N: radiale Ausdehnung des Abgassammelraums 9
- E: axiale Ausdehnung des Diffusorkanalauslasses 17
- T: radialer Abstand des Übergangspunkts 10 von dem Anfangspunkt 15 der zweiten Diffusorkanal-Kontur 6B
- A: Öffnungswinkel des Diffusorkanalauslasses 17 relativ zur radialen Richtung r

## Patentansprüche

1. Abgasturbine, umfassend:
- einen Turbinenrotor (12) mit einer Vielzahl von Turbinenrotorblättern (2) mit einer Turbinenrotorblatthöhe H, und
- eine Diffusoranordnung (20) mit einem Transversal-Diffusor (1) und einem Abgassammelraum (9),
wobei der Transversal-Diffusor (1) stromabwärts der Turbinenrotorblätter (2) angeordnet ist,
wobei der Transversal-Diffusor (1) einen gebogenen Diffusorkanal (13) aufweist, der an einem Diffusorkanalauslass (17) in den Abgassammelraum (9) mündet,
**dadurch gekennzeichnet, dass**
ein Verhältnis M/H zwischen einer axialen Ausdehnung M des Abgassammelraums (9) und der Turbinenrotorblatthöhe H einen Wert von 1,0 ≤ M/H ≤ 4,6 aufweist,
ein Verhältnis P/H zwischen einer radialen Ausdehnung P der Diffusoranordnung (20) und der Turbinenrotorblatthöhe H einen Wert von 2,7 ≤ P/H ≤ 4,9 aufweist,
ein Verhältnis D/H zwischen einer radialen Ausdehnung D des Diffusorkanals (13) und der Turbinenrotorblatthöhe H einen Wert von 2,5 ≤ D/H ≤ 3,0 aufweist, und
ein Verhältnis R/H zwischen einem Turbinennabenradius des Turbinenrotors (12) und der Turbinenrotorblatthöhe H einen Wert von 1,1 ≤ R/H ≤ 1,5 aufweist.

2. Abgasturbine nach Anspruch 1, wobei die Turbinenrotorblatthöhe H aus einem Bereich von einer minimalen Turbinenrotorblatthöhe H2 und einer maximalen Turbinenrotorblatthöhe H1 ausgewählt ist,
wobei ein Verhältnis H2/H1 zwischen der minimalen Turbinenrotorblatthöhe H2 und der maximalen Turbinenrotorblatthöhe H1 einen Wert von 0,8 ≤ H2/H1 ≤ 1,0 aufweist.

3. Abgasturbine nach Anspruch 1 oder 2, wobei der Diffusorkanalauslass (17) eine axiale Ausdehnung E aufweist, und wobei ein Verhältnis E/H zwischen der axialen Ausdehnung E des Diffusorkanalauslasses (17) und der Turbinenrotorblatthöhe H einen Wert von 1,052 ≤ E/H ≤ 1,116 aufweist.

4. Abgasturbine nach einem der Ansprüche 1 bis 3, wobei ein Verhältnis L/H zwischen einer axialen Länge L des Diffusorkanals (13) und der Turbinenrotorblatthöhe H einen Wert von 2,312 ≤ L/H ≤ 2,452 aufweist.

5. Abgasturbine nach einem der Ansprüche 1 bis 4, wobei ein Verhältnis D/H zwischen einer radialen Ausdehnung D des Diffusorkanals (13) und der Turbinenrotorblatthöhe H einen Wert von 2,623 ≤ D/H ≤ 2,782 aufweist.

6. Abgasturbine nach einem der Ansprüche 1 bis 5, wobei ein Verhältnis R/H zwischen einem Turbinennabenradius R und der Turbinenrotorblatthöhe H einen Wert von 1,248 ≤ R/H ≤ 1,324 aufweist.

7. Abgasturbine nach einem der Ansprüche 1 bis 6, wobei der Diffusorkanal (13) eine erste Diffusorkanal-Kontur (6A) umfasst, die sich von einem Anfangspunkt (14) der ersten Diffusorkanal-Kontur (6A) zu einem Endpunkt (8) der ersten Diffusorkanal-Kontur (6A) erstreckt und einer zweiten Diffusorkanal-Kontur (6B) gegenüberliegt,
wobei der Anfangspunkt (14) der ersten Diffusorkanal-Kontur (6A) in radialer Richtung weiter Außen angeordnet ist als ein Anfangspunkt (15) der zweiten Diffusorkanal-Kontur (6B).

8. Abgasturbine nach Anspruch 7, wobei die erste Diffusorkanal-Kontur (6A) derart ausgebildet ist, dass zwischen einer Tangentialen an dem Endpunkt (8) der ersten Diffusorkanal-Kontur (6A) relativ zur radialen Richtung ein Öffnungswinkel A des Diffusorkanalauslasses (17) bereitgestellt wird, wobei der Öffnungswinkel A einen Wert von 40°≤ A ≤ 50° aufweist.

9. Abgasturbine nach einem der Ansprüche 1 bis 8, wobei ein Verhältnis N/H zwischen einer radialen Ausdehnung N des Abgassammelraums (9) und der Turbinenrotorblatthöhe H einen Wert von (P-D)/H ≤ N/H ≤ (P-H)/H, insbesondere einen Wert von 2,130 ≤ N/H ≤ 2,260, aufweist, wobei P die radiale Ausdehnung der Diffusoranordnung (20) ist, und wobei D die radiale Ausdehnung des Diffusorkanals (13) ist.

10. Abgasturbine nach Anspruch 7 bis 9, wobei der Diffusorkanal (13) ein Einsatzelement (16) aufweist, welches eine dritte Diffusorkanal-Kontur (7) bereitstellt, wobei das Einsatzelement (16) derart angeordnet ist, dass die dritte Diffusorkanal-Kontur (7) an einem Übergangspunkt (10) in die erste Diffusorkanal-Kontur (6A) übergeht,
wobei der Übergangspunkt (10) zu dem Anfangspunkt (15) der zweiten Diffusorkanal-Kontur (6B) einen radialen Abstand T aufweist,
wobei ein Verhältnis T/H zwischen dem radialen Abstand T und der Turbinenrotorblatthöhe H einen Wert von 1,0 ≤T/H ≤ (P-N)/H, insbesondere einen Wert von 1,334 ≤T/H ≤ 1,415, aufweist, wobei P die radiale Ausdehnung des Transversal-Diffusors ist, und wobei N die radiale Ausdehnung des Abgassammelraums ist.

11. Abgasturbolader mit einer Abgasturbine gemäß einem der Ansprüche 1 bis 10.

## Claims

1. Exhaust gas turbine, comprising:
- a turbine rotor (12) with a multiplicity of turbine rotor blades (2) with a turbine rotor blade height H, and
- a diffuser arrangement (20) with a transverse diffuser (1) and an exhaust gas collecting space (9), the transverse diffuser (1) being arranged downstream of the turbine rotor blades (2),
the transverse diffuser (1) having a curved diffuser channel (13) which opens at a diffuser channel outlet (17) into the exhaust gas collecting space (9), **characterized in that**
a ratio M/H between an axial extent M of the exhaust gas collecting space (9) and the turbine rotor blade height H has a value of 1.0 ≤ M/H ≤ 4.6,
a ratio P/H between radial extent P of the diffuser arrangement (20) and the turbine rotor blade height H has a value of 2.7 ≤ P/H ≤ 4.9,
a ratio D/H between radial extent D of the diffuser channel (13) and the turbine rotor blade height H has a value of 2.5 ≤ D/H ≤ 3.0, and
a ratio R/H between a turbine hub radius R of the turbine rotor (12) and the turbine rotor blade height H has a value of 1.1 ≤ R/H ≤ 1.5.

2. Exhaust gas turbine according to Claim 1, the turbine rotor blade height H being selected from a range from a minimum turbine rotor blade height H2 to a maximum turbine rotor blade H1,
a ratio H2/H1 between the minimum turbine rotor blade height H2 and the maximum turbine rotor blade height H1 having a value of 0.8 ≤ H2/H1 ≤ 1.0.

3. Exhaust gas turbine according to Claim 1 or 2, the diffuser channel outlet (17) having an axial extent E, and the ratio E/H between the axial extent E of the diffuser channel outlet (17) and the turbine rotor blade height H having a value of 1.052 ≤ E/H ≤ 1.116.

4. Exhaust gas turbine according to one of Claims 1 to 3, a ratio L/H between an axial length L of the diffuser channel (13) and the turbine rotor blade height H having a value of 2.312 ≤ L/H ≤ 2.452.

5. Exhaust gas turbine according to one of Claims 1 to 4, a ratio D/H between the radial extent D of the diffuser channel (13) and the turbine rotor blade height H having a value of 2.623 ≤ D/H ≤ 2.782.

6. Exhaust gas turbine according to one of Claims 1 to 5, a ratio R/H between the turbine hub radius R and the turbine rotor blade height H having a value of 1.248 ≤ R/H ≤ 1.324.

7. Exhaust gas turbine according to one of Claims 1 to 6, the diffuser channel (13) comprising a first diffuser channel contour (6A) which extends from a starting point (14) of the first diffuser channel contour (6A) to an endpoint (8) of the first diffuser channel contour (6A) and lies opposite a second diffuser channel contour (6B), the starting point (14) of the first diffuser channel contour (6A) being arranged further to the outside in the radial direction than a starting point (15) of the second diffuser channel contour (6B).

8. Exhaust gas turbine according to Claim 7, the first diffuser channel contour (6A) being configured in such a way that an opening angle A of the diffuser channel outlet (17) is provided between a tangential at the end point (8) of the first diffuser channel contour (6A) relative to the radial direction, the opening angle A having a value of 40° ≤ A ≤ 50°.

9. Exhaust gas turbine according to one of Claims 1 to 8, a ratio N/H between radial extent N of the exhaust gas collecting space (9) and the turbine rotor blade height H having a value of (P-D)/H ≤ N/H ≤ (P-H)/H, in particular a value of 2.130 ≤ N/H ≤ 2.260, P being the radial extent of the diffuser arrangement (20), and D being the radial extent of the diffuser channel (13).

10. Exhaust gas turbine according to Claims 7 to 9, the diffuser channel (13) having an insert element (16) which provides a third diffuser channel contour (7), the insert element (16) being arranged in such a way that the third diffuser channel contour (7) merges at the transition point (10) into the first diffuser channel contour (6A), the transition point (10) being at a radial spacing T from the starting point (15) of the second diffuser channel contour (6B),
a ratio T/H between the radial spacing T and the turbine rotor blade height H having a value of 1.0 ≤ T/H ≤ (P-N)/H, in particular a value of 1.334 ≤ T/H ≤ 1.415, P being the radial extent of the transverse diffuser, and N being the radial extent of the exhaust gas collecting space.

11. Exhaust gas turbocharger with an exhaust gas turbine according to one of Claims 1 to 10.

## Revendications

1. Turbine à gaz d'échappement comprenant :
- un rotor de turbine (12) muni d'un grand nombre d'aubes de rotor de turbine (2) ayant une hauteur d'aube de rotor de turbine H, et
- un ensemble diffuseur (20) muni d'un diffuseur transversal (1) et d'une chambre de collecte de gaz d'échappement (9),
le diffuseur transversal (1) étant disposé en aval des aubes de rotor de turbine (2),
le diffuseur transversal (1) comportant un conduit de diffuseur incurvé (13) qui débouche dans la chambre de collecte de gaz d'échappement (9) au niveau d'une sortie de conduit de diffuseur (17),
**caractérisé en ce que**
un rapport M/H entre une étendue axiale M de la chambre de collecte de gaz d'échappement (9) et la hauteur d'aube de rotor de turbine H a une valeur de 1,0 ≤ M/H ≤ 4,6,
un rapport P/H entre une étendue radiale P de l'ensemble diffuseur (20) et la hauteur d'aube de rotor de turbine H a une valeur de 2,7 ≤ P/H ≤ 4,9,
un rapport D/H entre une étendue radiale D du conduit de diffuseur (13) et la hauteur d'aube de rotor de turbine H a une valeur de 2,5 ≤ D/H ≤ 3,0, et
un rapport R/H entre un rayon de moyeu de turbine R du rotor de turbine (12) et la hauteur d'aube de rotor de turbine H a une valeur de 1,1 ≤ R/H ≤ 1,5.

2. Turbine à gaz d'échappement selon la revendication 1, la hauteur d'aube de rotor de turbine H étant choisie dans une plage allant d'une hauteur d'aube de rotor de turbine minimale H2 à une hauteur d'aube de rotor de turbine maximale H1,
un rapport H2/H1 entre la hauteur d'aube de rotor de turbine minimale H2 et la hauteur d'aube de rotor de turbine maximale H1 ayant une valeur de 0,8 ≤ H2/H1 ≤ 1,0.

3. Turbine à gaz d'échappement selon la revendication 1 ou 2, la sortie de conduit de diffuseur (17) ayant une étendue axiale E, et un rapport E/H entre l'étendue axiale E de la sortie de conduit de diffuseur (17) et la hauteur d'aube de rotor de turbine H ayant une valeur de 1,052 ≤ E/H ≤ 1,116.

4. Turbine à gaz d'échappement selon l'une des revendications 1 à 3, un rapport L/H entre une longueur axiale L du conduit de diffuseur (13) et la hauteur d'aube de rotor de turbine H ayant une valeur de 2,312 ≤ L/H ≤ 2,452.

5. Turbine à gaz d'échappement selon l'une des revendications 1 à 4, un rapport D/H entre une étendue radiale D du conduit de diffuseur (13) et la hauteur d'aube de rotor de turbine H ayant une valeur de 2,623 ≤ D/H ≤ 2,782.

6. Turbine à gaz d'échappement selon l'une des revendications 1 à 5, un rapport R/H entre un rayon de moyeu de turbine R et la hauteur d'aube de rotor de turbine H ayant une valeur de 1,248 ≤ R/H ≤ 1,324.

7. Turbine à gaz d'échappement selon l'une des revendications 1 à 6, le conduit de diffuseur (13) comprenant un premier contour de conduit de diffuseur (6A) qui s'étend depuis un point de départ (14) du premier contour de conduit de diffuseur (6A) jusqu'à un point final (8) du premier contour de conduit de diffuseur (6A) et qui est opposé à un deuxième contour de conduit de diffuseur (6B), le point de départ (14) du premier contour de conduit de diffuseur (6A) étant disposé plus à l'extérieur dans la direction radiale qu'un point de départ (15) du deuxième contour de conduit de diffuseur (6B).

8. Turbine à gaz d'échappement selon la revendication 7, le premier contour de conduit de diffuseur (6A) étant conçu de manière à ce qu'un angle d'ouverture A de la sortie de conduit de diffuseur (17) est prévu entre une tangente au point d'extrémité (8) du premier contour de conduit de diffuseur (6A) par rapport à la direction radiale, l'angle d'ouverture A ayant une valeur de 40° ≤ A ≤ 50°.

9. Turbine à gaz d'échappement selon l'une des revendications 1 à 8, un rapport N/H entre une étendue radiale N de la chambre de gaz d'échappement (9) et la hauteur d'aube de rotor de turbine H ayant une valeur de (P-D)/H ≤ N/H ≤ PH)/H, en particulier une valeur de 2,130 ≤ N/H ≤ 2,260, P étant l'étendue radiale de l'ensemble diffuseur (20) et D étant l'étendue radiale du conduit de diffuseur (13).

10. Turbine à gaz d'échappement selon les revendications 7 à 9, le conduit de diffuseur (13) comportant un élément d'insert (16) qui fournit un troisième contour de conduit de diffuseur (7), l'élément d'insert (16) étant disposé de manière à ce que le troisième contour de conduit de diffusion (7) se transforme en le premier contour de conduit de diffusion (6A) en un point de transition (10),
le point de transition (10) au point de départ (15) du deuxième contour de conduit de diffuseur (6B) ayant une distance radiale T,
un rapport T/H entre la distance radiale T et la hauteur d'aube de rotor de turbine H ayant une valeur de 1,0 ≤ T/H ≤ (P-N)/H, en particulier une valeur de 1,334 ≤ T/H ≤ 1,415, P étant l'étendue radiale du diffuseur transversal, et N étant l'étendue radiale de la chambre de collecte de gaz d'échappement.

11. Turbocompresseur à gaz d'échappement comprenant une turbine à gaz d'échappement selon l'une des revendications 1 à 10.
